# EUROPEAN PATENT APPLICATION

(11) **EP 1 852 862 A1**
(43) Date of publication of application: **07.11.2007**
(21) Application number: 06711724.2
(22) Date of filing: 16.01.2006
(51) Int. Cl.: G11B 17/00

(54) **DISK IDENTIFICATION DEVICE, DISK LOADING/EJECTION DEVICE, AND DISK DEVICE**

(30) Priority: 17.01.2005 JP 2005009051
(71) Applicant: MATSUSHITA ELECTRIC INDUSTRIAL CO., LTD., Osaka 571-8501 (JP)
(72) Inventor: URUSHIHARA, Kenji c/o Matsushita Electr.Ind., Chuo-ku, Osaka-shi, Osaka 540-6207 (JP); HASEGAWA, Kazunori c/o Matsushita Electr.Ind., Chuo-ku, Osaka-shi, Osaka 540-6207 (JP)
(74) Representative: Balsters, Robert
(86) International application number: PCT/JP2006/300443
(87) International publication number: WO 2006/075738

(57) **Abstract**

A problem of the present invention is to provide a disc identification device, a disc insertion-ejection device and a disc device which can positively prevent two discs from being inserted into the apparatus. There is provided disc thickness detection unit (109), (110) for electrically detecting a thickness of discs (300) inserted into an apparatus of the disc device (100), and there is provided a construction for judging whether the number of the discs (300) inserted into the apparatus is one or plural, and it is electrically identified whether the number of the discs (300) inserted into the apparatus is one or plural, and by controlling mechanisms on the basis of this identification result, the stable disc insertion and ejection can be achieved, and also damage to the mechanisms and the discs can be reduced.

## Description

### TECHNICAL FIELD

The present invention relates to a disc identification device, a disc insertion-ejection device and a disc device which are capable of preventing two discs from being inserted into the disc device.

### BACKGROUND ART

A disc device such as a vehicle-installed audio machine including a disc identification device in a related art has a configuration wherein the space between upper and lower fixed disc guide members 30, 31, 32, and 33 is set to a thickness more than the thickness of one disc and less than that of two discs, thereby preventing two discs from being inserted into the device, as shown in Figs. 28 and 29.

Patent document 1: JP-A-2001-312850 (Fig. 7, Fig. 9 (b))

### Disclosure of the Invention

### Problems to be Solved by the Invention

However, in the disc device in the related art, if two discs are inserted exceeding the proof stress of the upper and lower disc guide members, the upper and lower disc guide members become deformed or are broken and the proof stress for the later insertion of two discs is remarkably degraded and breakage or a flaw may occur on the two inserted discs.

The present invention has been made in view of the above circumstances, and an object of the invention is to provide a disc device for identifying and determining the number of discs inserted into the disc device and controlling the mechanism of the disc device based on the identification result, so that stable disc insertion and ejection can be realized and damage to the mechanism of the disc device and the disc can be reduced.

### MEANS FOR SOLVING THE PROBLEM

A disc identification device of the present invention includes a disc thickness detection unit that detects a thickness of discs inserted into the device. It is identified whether the number of the discs inserted into an apparatus is one or plural.

With this construction, it is identified whether the number of the discs inserted into the apparatus is one or plural, and by controlling mechanisms on the basis of this identification result, the stable disc insertion and ejection can be achieved, and also damage to the mechanisms and the discs can be reduced.

Furthermore, the disc identification device of the present invention includes a disc restricting member that contacts a label surface of the disc inserted into the apparatus to hold the label surface in a predetermined position, the label surface being on a side opposite to a recording surface of the disc; and a disc conveying roller that is urged toward the disc restricting member to be press-contacted with the recording surface of the disc, and conveys the disc by its rotation. The disc restricting member is provided at a side opposite to the recording surface of the disc relative to the disc conveying roller so as to restrict movement of the disc in a direction opposed to the recording surface of the disc.

With this construction, an inclination of the disc developing at the time of inserting the disc into the apparatus is reduced, and the stable disc thickness detection can be achieved.

Furthermore, in the disc identification device of the present invention, a thickness detection by the disc thickness detection unit is performed at a portion of the apparatus disposed inwardly relative to the disc conveying roller.

With this construction, the stable disc thickness detection of the discs inserted into the apparatus can be achieved, and also a parts-saving design of the disc thickness detection mechanism can be achieved.

Furthermore, in the disc identification device of the present invention, the disc thickness detection unit is configured by a light-emitting element and a light reception element which are disposed at a side facing the recording surface of the disc in the process of being conveyed, and detects an amount of light reflected from the recording surface of the disc to detects the thickness of the discs.

With this construction, the stable disc thickness detection of the discs inserted into the apparatus can be achieved, and also the parts-saving design of the disc thickness detection mechanism can be achieved.

Furthermore, in the disc identification device of the present invention the light-emitting element and the light reception element which are disposed at a side facing the recording surface of the disc in the process of being conveyed.

With this construction, by reducing the influence of the magnitude of a light reflectance of the disc inserted into the apparatus, the stable disc thickness detection can be achieved.

Furthermore, in the disc identification device of the present invention, the disc thickness detection is disposed at a position where a recording surface of an 8-cm disc held on an adapter passes.

With this construction, the stable disc thickness detection of the discs including the 8-cm disc held on the adapter can be achieved.

Furthermore, in the disc identification device of the present invention, the disc restricting member is provided at a side opposite to the recording surface of the disc relative to the disc conveying roller so as to restrict movement of the disc in a direction opposed to the recording surface of the disc.

With this construction, the stable disc thickness detection of the disc inserted into the apparatus can be achieved.

Furthermore, in the disc identification device of the present invention, a first lever member which is moved by contact with the disc is provided at a front side in a disc inserting direction, and whether the number of the discs inserted into the apparatus is one or plural is identified by a timing of operation of the first lever member.

With this construction, when a plurality of discs are inserted into the apparatus, and the amount of offset of the discs from each other is large, whether the number of the discs inserted into the apparatus is one or plural is identified earlier than the thickness detection by the disc thickness detection means, and by doing so, the insertion of two discs can be stably prevented.
Also, even when whether the number of the discs inserted into the apparatus is one or plural can not be identified by the thickness detection of the disc thickness detection unit because of a large offset amount despite the fact that the plurality of discs have been inserted into the apparatus, whether the number of the discs inserted into the apparatus is one or plural is identified by the timing of operation of the lever, and by doing so, the insertion of two discs can be stably prevented.

Furthermore, a disc insertion-ejection device of the present invention has a construction in which operations for inserting and ejecting the disc are controlled on the basis of the identification result of the above-mentioned disc identification device.

With this construction, the insertion of two discs can be stably prevented regardless of the kind, magnitude of the light reflectance and offset amount of the plurality of discs inserted into the apparatus.

Furthermore, in the disc insertion-ejection device of the present invention, even when a plurality of discs are inserted into the apparatus, a disc conveying path capable of inserting and ejecting the discs is secured.

With this construction, even when a plurality of discs are forcibly pushed in, the apparatus and the discs will not be damaged, and therefore the stable disc insertion and ejection can be achieved, and also damage to the mechanisms and the discs can be reduced.

Furthermore, a disc device of the present invention includes the above-mentioned disc identification device and the above-mentioned disc insertion-ejection device.

With this construction, the insertion of two discs can be stably prevented regardless of the kind, magnitude of the light reflectance and offset amount of the plurality of discs inserted into the apparatus, and also even when a plurality of discs are forcibly pushed in, the apparatus and the discs will not be damaged, and therefore the stable disc insertion and ejection can be achieved, and also damage to the mechanisms and the discs can be reduced.

Furthermore, an electronic apparatus of the present invention includes the above-mentioned disc device.

With this construction, the insertion of two discs can be stably prevented regardless of the kind, magnitude of the light reflectance and offset amount of the plurality of discs inserted into the apparatus, and also even when a plurality of discs are forcibly pushed in, the apparatus and the discs will not be damaged, and therefore the stable disc insertion and ejection can be achieved, and also damage to the mechanisms and the discs can be reduced.

### ADVANTAGE OF THE INVENTION

In the present invention, the number of discs inserted into the disc device is identified, and by controlling the mechanisms of the disc device on the basis of this identification result, the stable disc insertion and ejection can be achieved, and also damage to the mechanisms of the disc device and the discs can be reduced.

### BRIEF DESCRIPTION OF THE DRAWINGS

[Fig. 1] A perspective view of the whole of a car audio apparatus as an electronic apparatus.
[Fig. 2] A top plan view of an important portion of a disc device according to a first embodiment of the present invention.
[Fig. 3] A side-elevational view of an important portion of the disc device according to the first embodiment of the present invention.
[Fig. 4] A front-elevational view of an important portion of the disc device according to the first embodiment of the present invention.
[Fig. 5] A top plan view of an important portion of the disc device in which an 8-cm disc held on an 8-cm adapter is inserted according to the first embodiment of the present invention.
[Fig. 6] A top plan view of an important portion of the disc device according to the first embodiment of the present invention during the time when a disc passes a disc insertion and ejection portion.
[Fig. 7] A side-elevational view of an important portion of the disc device according to the first embodiment of the present invention during the time when the disc passes the disc insertion and ejection portion.
[Fig. 8] A side-elevational view of the important portion of the disc device according to the first embodiment of the present invention during the time when the disc passes the disc insertion and ejection portion.
[Fig. 9] A top plan view of the important portion of the disc device according to the first embodiment of the present invention during the time when the disc passes the disc insertion and ejection portion.
[Fig. 10] A top plan view of the important portion of the disc device according to the first embodiment of the present invention during the time when the disc passes the disc insertion and ejection portion.
[Fig. 11] A top plan view of the important portion of the disc device according to the first embodiment of the present invention during the time when the disc passes the disc insertion and ejection portion.
[Fig. 12] A top plan view of the important portion of the disc device according to the first embodiment of the present invention during the time when the disc passes the disc insertion and ejection portion.
[Fig. 13] A timing chart showing outputs of sensors of the disc device according to the first embodiment of the present invention at the time when the disc passes the disc insertion and ejection portion.
[Fig. 14] A top plan view of the important portion of the disc device according to the first embodiment of the present invention during the time when the disc passes the disc insertion and ejection portion.
[Fig. 15] A top plan view of the important portion of the disc device according to the first embodiment of the present invention during the time when the disc passes the disc insertion and ejection portion.
[Fig. 16] A top plan view of the important portion of the disc device according to the first embodiment of the present invention during the time when two discs pass the disc insertion and ejection portion.
[Fig. 17] A side-elevational view of the important portion of the disc device according to the first embodiment of the present invention during the time when the two discs pass the disc insertion and ejection portion.
[Fig. 18] A timing chart showing the outputs of the sensors of the disc device according to the first embodiment of the present invention at the time when the two discs pass the disc insertion and ejection portion.
[Fig. 19] A top plan view of the important portion of the disc device according to the first embodiment of the present invention during the time when the two discs pass the disc insertion and ejection portion.
[Fig. 20] A timing chart showing the outputs of the sensors of the disc device according to the first embodiment of the present invention at the time when the two discs passes the disc insertion and ejection portion.
[Fig. 21] A top plan view of an important portion of a disc device according to a second embodiment of the present invention.
[Fig. 22] A side-elevational view of an important portion of the disc device according to the second embodiment of the present invention.
[Fig. 23] A front-elevational view of an important portion of the disc device according to the second embodiment of the present invention.
[Fig. 24] (a) A front-elevational view of an important portion of the disc device according to the second embodiment of the present invention during the time when one disc passes a disc insertion and ejection portion. (b) A front-elevational view of the important portion of the disc device according to the second embodiment of the present invention during the time when two discs pass the disc insertion and ejection portion.

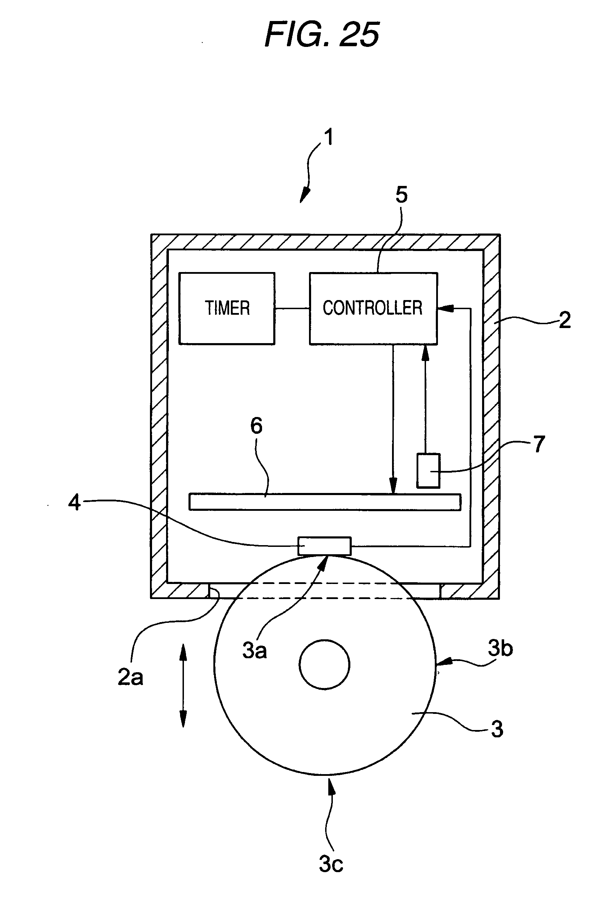

[Fig. 25] A plan view showing a related disc insertion-ejection device.

### DESCRIPTION OF THE REFERENCE NUMERALS

- 10: car audio apparatus (electronic apparatus)
- 100: disc device
- 102a: roller member (disc conveying roller)
- 102b: roller member (disc restricting member)
- 103: first lever member
- 109: light-emitting element (disc thickness detection unit)
- 110: light reception element (disc thickness detection unit)
- 300: disc
- 300a: recording surface
- 300b: label surface
- 301: adapter
- 302: 8-cm disc
- 400: disc identification device
- 500: disc insertion-ejection device

### BEST MODE FOR CARRYING OUT THE INVENTION

A disc identification device, a disc insertion-ejection device and a disc device which are an embodiment of the present invention will hereafter be described using the drawings

### (First Embodiment)

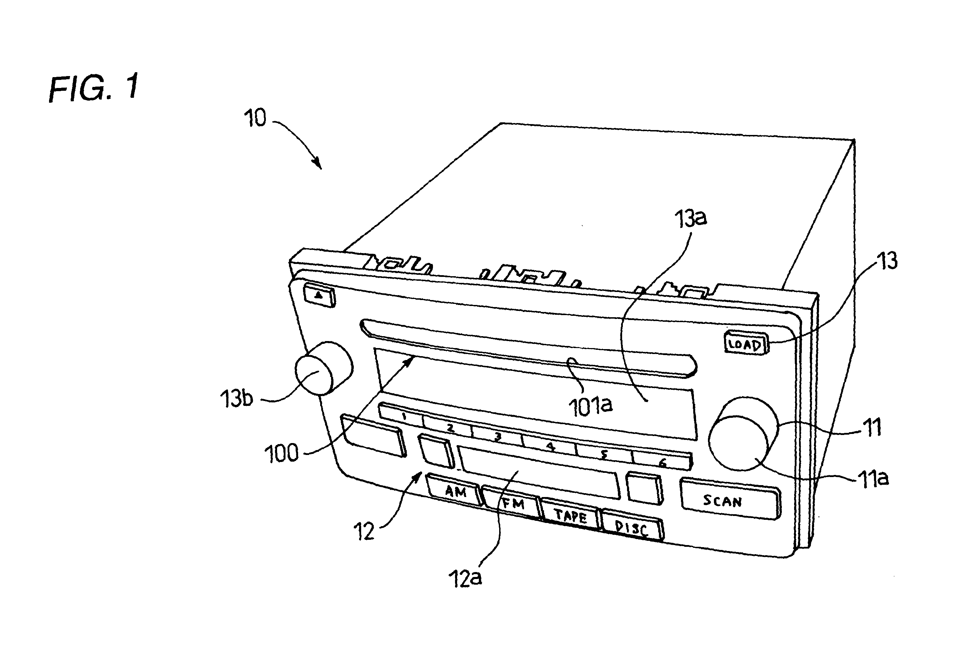

Fig. 1 is a perspective view of the whole of a car audio apparatus 10 (as an electronic apparatus) containing a disc device 100 according to an embodiment of the present invention. This car audio apparatus 10 contains a radio 11, a cassette tape reproducing apparatus 12, etc., in addition to the disc device 100, and in addition to a display portion 13a and a power/volume dial 13b which are used in common for all functions, a disc insertion port 101a for the disc device 100, and a tuning dial 11a for the radio, a cassette tape insertion port 12a, etc., are provided at a front panel 13. Also, a control portion (showing is omitted) for controlling the radio 11, the cassette tape reproducing apparatus 12, the disc device 100, etc., are provided in the interior.

Next, the disc device 100 will be described.

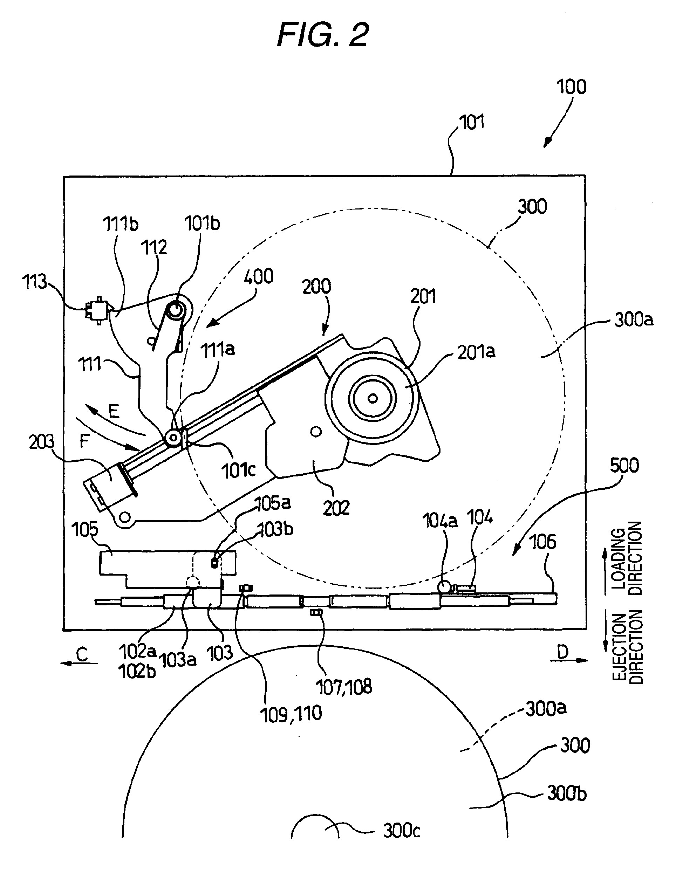

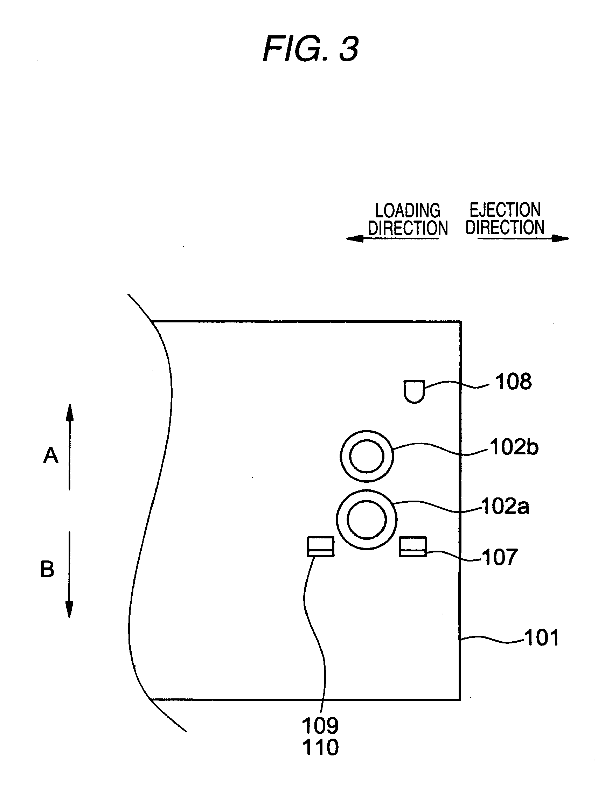

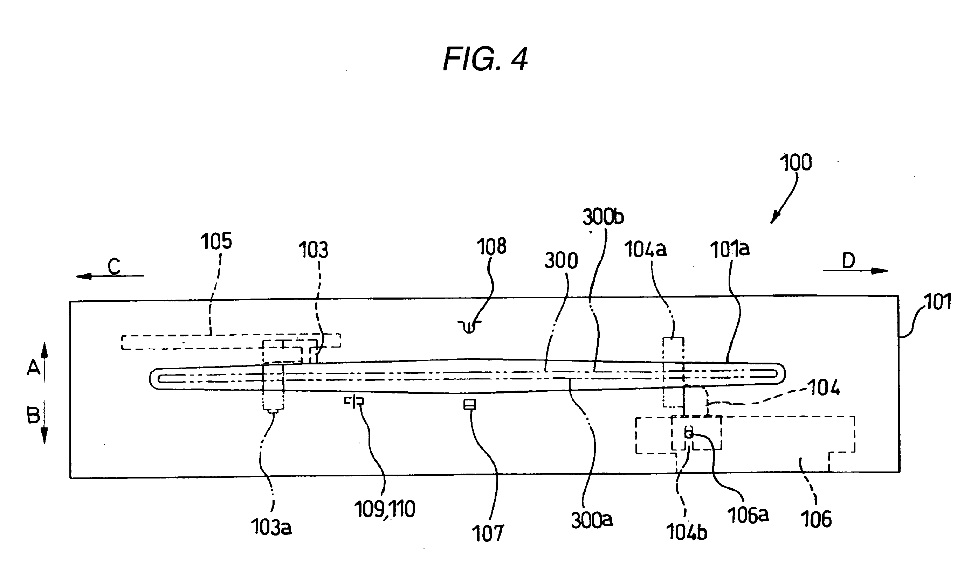

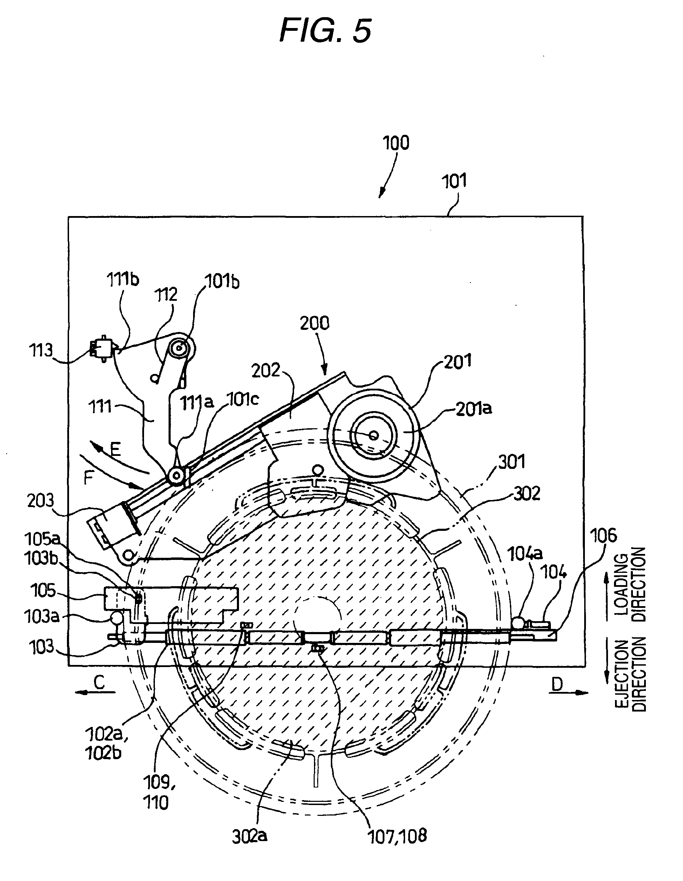

Fig. 2 is a top plan view of an important portion of the disc device according to the first embodiment of the present invention, Fig. 3 is a side-elevational view of an important portion of the disc device according to the first embodiment of the present invention, Fig. 4 is a front-elevational view of an important portion of the disc device according to the first embodiment of the present invention, and Fig. 5 is a top plan view of an important portion of the disc device according to the first embodiment of the present invention in which an 8-cm disc held on an 8-cm adapter is inserted.
In Figs. 2 to 4, a disc identification device 400 for electrically detecting a thickness of discs 300 inserted into the interior of the disc device 100 to judge whether the number of the inserted discs 300 is one or plural, as well as a disc insertion-ejection device 500 for effecting a disc insertion and ejection operation on the basis of a identification result of the disc identification device 400, is provided within a chassis 101 of the disc device 100.
The disc insertion port 101a is disposed at a front surface of the chassis 101. A pair of upper and lower roller members 102b, 102a as conveying rollers for contacting an inserted disc to transmit power thereto to convey the disc so as to effect the insertion (loading) and discharge (ejection) of the disc are provided within the chassis 101, and are disposed in the vicinity of the disc insertion port.

The roller member 102a is provided as the disc conveying roller, and is movable relative to the chassis 101 in an upward-downward direction (a direction A or a direction B in Fig. 3). The roller member 102a is normally urged upward by a resilient member (showing is omitted), and is adapted to be pressed against a recording surface 300a of the inserted disc 300. Incidentally, the roller member 102a is driven to be rotated by a power source (showing is omitted) such as a motor.
On the other hand, the roller member 102b is provided as a disc restricting member, and is rotatable relative to the chassis 101, and is fixed in the upward-downward direction (the direction A or the direction B in the drawings). The roller member 102b is adapted to abut against a label surface 300b of the inserted disc 300 facing away from the recording surface 300a to hold the label surface 300b at a predetermined height.

Therefore, when the disc 300 is inserted (loaded) into the disc insertion port 101a, the roller member 102a is moved downward (in the direction B in Fig. 3) against the bias of the resilient member by the thickness of the disc 300, and is pressed (in the direction A in Fig. 3) against the lower surface of the disc 300 by a resilient force of the resilient member, and holds, together with the roller member 102b, the disc 300 therebetween. The roller member 102a is driven to be rotated, and the roller member 102b is free to rotate, and therefore the disc 300 is conveyed into the interior of the chassis 101. Incidentally, the discharge (ejection) of the disc 300 is effected similarly by the rotation of the roller member 102a.

With respect to the movement of the roller member 102a in the downward direction (the direction B in Fig. 3), there is secured displacement which is larger than displacement effected when a plurality of (for example, two) discs 300 are inserted. Therefore, the construction is such that even when a plurality of discs 300 are inserted into the disc insertion port 101 a and therefore into the interior of the apparatus, the plurality of (for example, two) discs can be loaded and ejected.

Further, a lever member 103 having a shaft portion 103a for contacting an outer periphery of a disc 300 when the disc 300 is inserted into the interior of the disc device 100, as well as a lever member 104 having a shaft potion 104a for contacting the outer periphery of the disc 300 when the disc 300 is inserted into the interior of the disc device 100, is provided near to the disc insertion port of the chassis 101, and is disposed at that side of the roller members 102a, 102b facing in the loading direction. The lever member 103 and the lever member 104 are so provided as to slide in left and right directions (a direction C and a direction D in Fig. 2).

A resilient member (showing is omitted) urging the lever member 103 and the lever member 104 toward a central portion of the disc insertion port is provided between the lever member 103 and the lever member 104, and in a condition in which any disc 300 is not inserted in the apparatus, the lever member 103 and the lever member 104 are contacted respectively with projections (showing is omitted) provided at the chassis 101, and are held in their initial positions close to each other.

A position sensor 105 having a projection 105a and a position sensor 106 having a projection 106a are provided respectively at those portions of the chassis 101 disposed near to the disc insertion port. The projection 105a of the position sensor 105 is engaged in a groove 103b of the lever member 103, and the construction is such that the movement of the lever member 103 in the left and right directions (the direction C and the direction D in the drawings) can be detected by the position sensor 105. Similarly, the projection 106a of the position sensor 106 is engaged in a groove 104b of the lever member 104, and the construction is such that the movement of the lever member 104 in the left and right directions (the direction C and the direction D in the drawings) can be detected by the position sensor 106.

Therefore, when a disc 300 is inserted into the insertion port 101 a, the outer peripheral surface of the disc 300 is forced between the shaft portions to move the shaft portions 103a, 104a away from each other. As a result of the movements of the shafts 103a, 104a, the lever members 103, 104 move outwardly, and the movements of the lever members 103, 104 are detected by the position sensors 105, 106, respectively.

A light-emitting element 107 for emitting light and a light reception element 108 for receiving light emitted from the light-emitting element 107 are provided respectively at those portions of the chassis 101 disposed near to the disc insertion port 101a in a manner to form a pair, and are disposed forwardly of (below in Fig. 2) the roller members 102a, 102b One is provided at a position higher than the disc insertion port 101 a, and the other is provided at a position lower than the disc insertion port 101 a. Therefore, light emitted from the light-emitting element 107 goes across the disc insertion port 101a, and is received by the light reception element 108.
Therefore, when a disc 300 is inserted into the apparatus, light emitted from the light-emitting element 107 is shielded by the disc 300, and an output of the light reception element 108 changes to High, and with this construction the insertion of the disc into the apparatus can be detected.

As a disc thickness detection unit, a light-emitting element 109 and a light reception element 110 forming, together with this light-emitting element 109, a pair, are provided near to the disc insertion port 101a of the chassis 101, and are disposed at that side of the roller members 102a, 102b facing in the loading direction, and are so arranged as to face a recording surface 300a (a lower side in Fig. 4) of a disc 300 inserted into the apparatus.
Therefore, when a disc 300 is inserted into the apparatus, light emitted from the light-emitting element 109 is reflected by a recording surface 300a of the disc 300, and an output of the light reception element 110 changes to Low, and also the amount of the output of the light reception element 110 and the timing from the emission of the light to the reception of the light are changed by the thickness of the inserted discs 300, so that the thickness of the discs inserted in the apparatus can be detected.

Incidentally, the light-emitting element 109 and the light reception element 110 are disposed at a position where a recording surface 302a of an 8-cm disc 302 exists when the 8-cm adapter 301 having the 8-cm disc 302 held thereon is inserted into the chassis 101 as shown in Fig. 5.
Incidentally, the light reception elements 108, 110 output High in a light-shielded condition, and output Low in a light-receiving condition.

A lever member 111 is provided within the chassis 101 so as to be pivotally moved about a shaft member 101b provided at the chassis 101. A roller member 111 a which can contact an inserted disc 300 to be rotated is provided at one end of this lever member 111, and a projection 111b is provided at the other end of the lever member 111. This projection 111 b can contact a push switch 113 mounted on the chassis 101, and the push switch 113 is switched between an ON state and an OFF state by pivotal movement of the lever member 111.

Incidentally, the lever member 111 is normally urged in a direction F (in Fig. 2) by a resilient member 112, and in a condition in which any disc 300 is not inserted in the interior of the chassis 101, the roller member 111a is held in an initial position where it abuts against a stopper 101c provided at the chassis 101. In this condition, the push switch 113 is in the OFF state, and outputs Low. Incidentally, the stopper 101c is disposed at a low position so that it will not interfere with an inserted disc 300. The roller member 111a has a certain degree of height so that it can abut against the stopper 101c and also that it projects upwardly beyond the stopper 101 c so as to abut against the inserted disc 300.
On the other hand, when a disc 300 is inserted, the outer peripheral surface of the disc 300 pushes the roller member 111a of the lever member 111 outward (to the left in Fig. 2) to pivotally move the lever member 111, and the projection 111 b of the lever member 111 is brought into contact with the push switch 113 to turn it on, so that the push switch outputs High.

A disc recording/reproduction portion 200 is provided at a central portion of the chassis 101, and includes a turntable 200a for holding the center of a disc 300, a spindle motor 201 for rotating this turntable 200a, an optical pickup 202 for recording and reproducing information of the disc 300, a traverse motor 203 for driving the optical pickup 202 in a direction toward the inner periphery of the disc and in a direction toward the outer periphery of the disc, etc.

Next, the operation for inserting and ejecting a disc 300 will be described.

### (1) Loading Operation of Disc 300

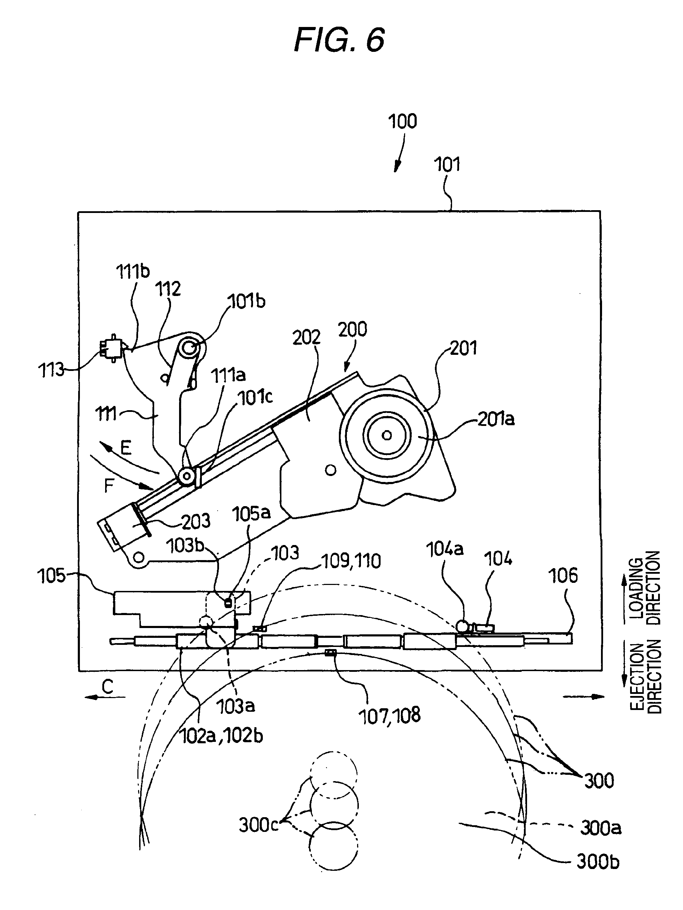

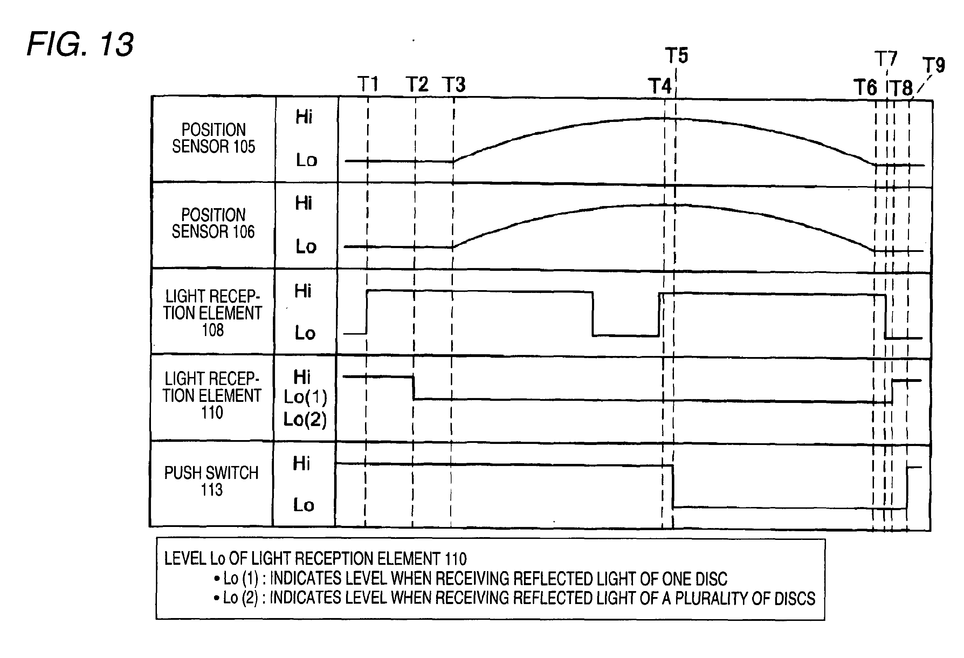

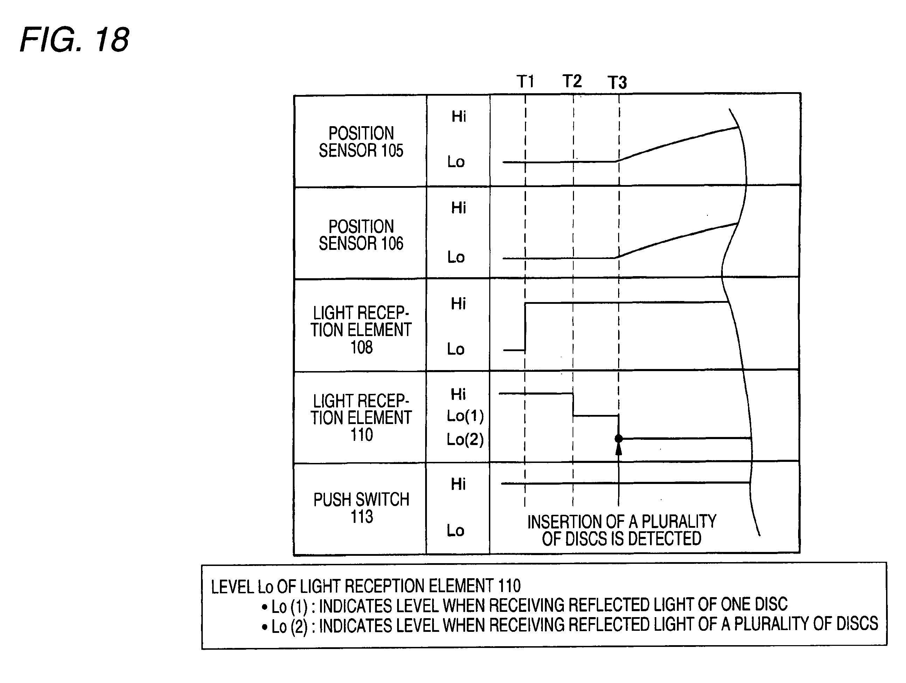

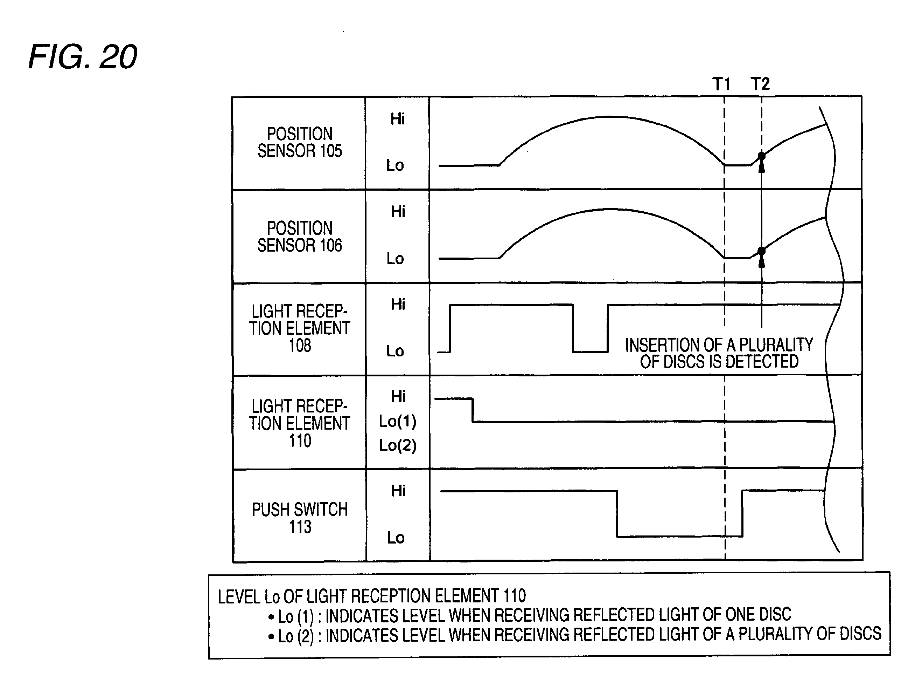

First, the loading operation of the disc device 100 for a disc 300 will be described using Fig. 6 to Fig. 13. Incidentally, in the disc device 100 of this embodiment, the 8-cm adapter 301 holding an 8-cm disc 302 at its central portion is handled similarly with a disc 300, and therefore explanation of the operation of the disc device 100 for the 8-cm adapter 301 holding the 8-cm disc 302 at its central portion will be omitted.
Incidentally, in Fig. 13, the Low level of the light reception element 110 is binary, and Low(1) indicates a level obtained when reflected light from one disc is received, and Low(2) indicates a level obtained when reflected light from a plurality of discs is received (This is the same with Fig. 18, Fig. 20).

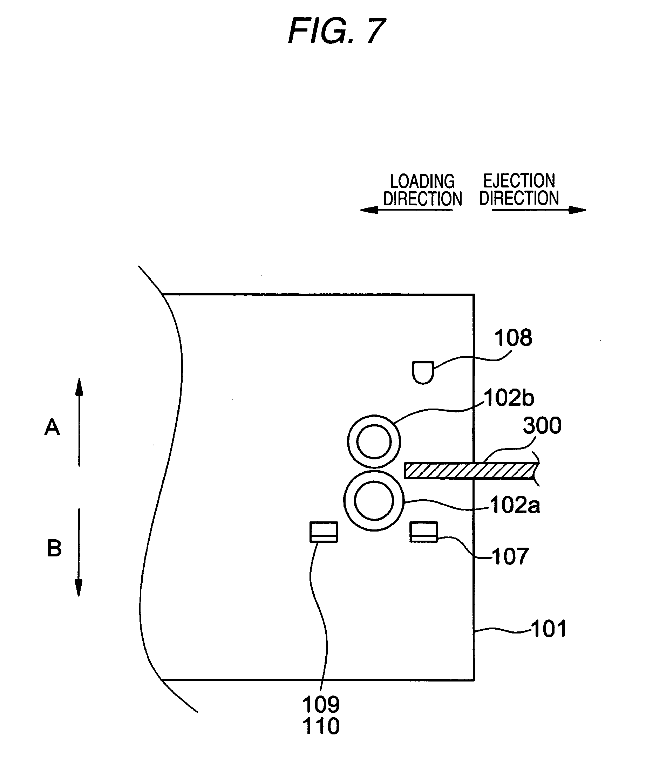

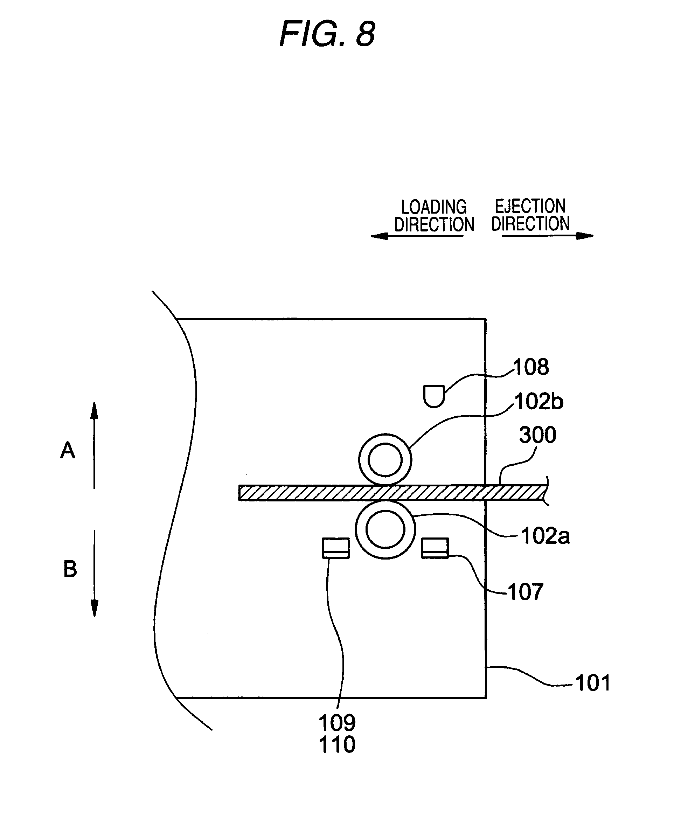

When a disc 300 is inserted into the disc insertion port 101 a of the chassis 101 as shown in Fig. 6, light emitted from the light-emitting element 107 is shielded by the disc 300 as shown in Fig. 7, and the output of the light reception element 108 changes to High (T1 in Fig. 13). As a result, the fact that the disc 300 has been inserted into the interior of the disc device 100 is detected, and the disc device 100 causes an operation of the power source to be started, thereby starting the rotation of the roller member 102a.
When the disc 300 is further inserted, the disc 300 is held between the roller members 102a, 102b, and is conveyed as shown in Fig. 8, thus starting an automatic loading of the disc 300.

When the automatic loading of the disc 300 is continued, the disc 300 reaches the disc thickness detection position formed by the light-emitting element 109 and the light reception element 110 as shown in Fig. 8, and light emitted from the light-emitting element 109 is reflected by the disc 300, and reaches the light reception element 110, so that the output of the light reception element 110 changes from High to Low (T2 in Fig. 13).

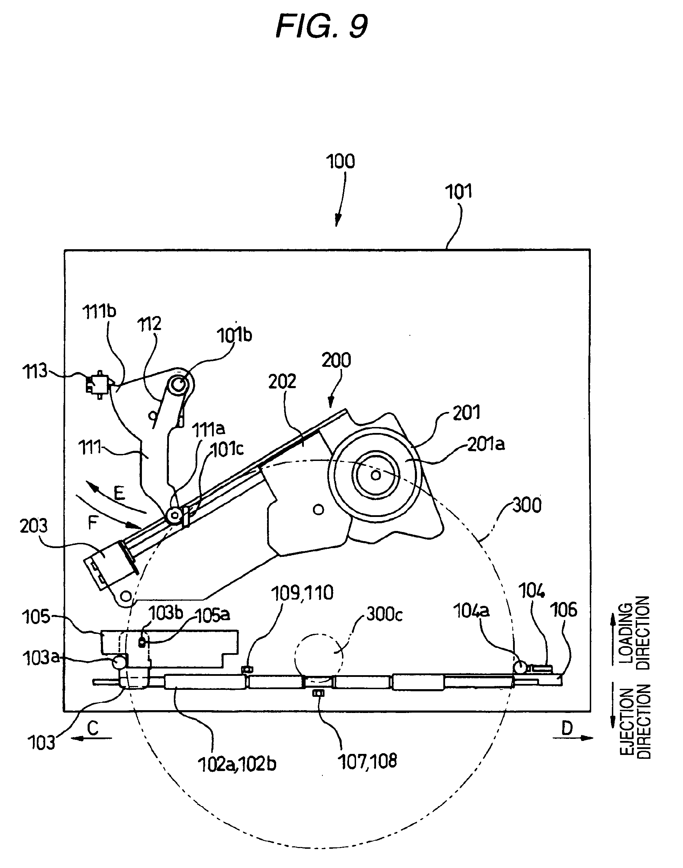

When the disc 300 further advances, the disc 300 is brought into contact with the shaft members 103a and 104a of the lever members 103 and 104 (as indicated by a two-dot chain line in Fig. 6), and slides the lever member 103 in the direction C (in the drawings), and also slides the lever member 104 in the direction D (in the drawings). As a result, the output levels of the position sensors 105, 106 increase (T3 in Fig. 13), and the output levels of the position sensors 105 and 106 become maximum with a maximum-diameter portion of the disc 300 held in contact with the shaft members 103a and 104a (T4 in Fig. 13) as shown in Fig. 9. Incidentally, in Fig. 13, the signal of the light reception element 108 changes from High to Low halfway, and again changes to High, and this indicates a condition in which a mounting hole 300c at the center of the disc 300 in the process of being conveyed is detected.

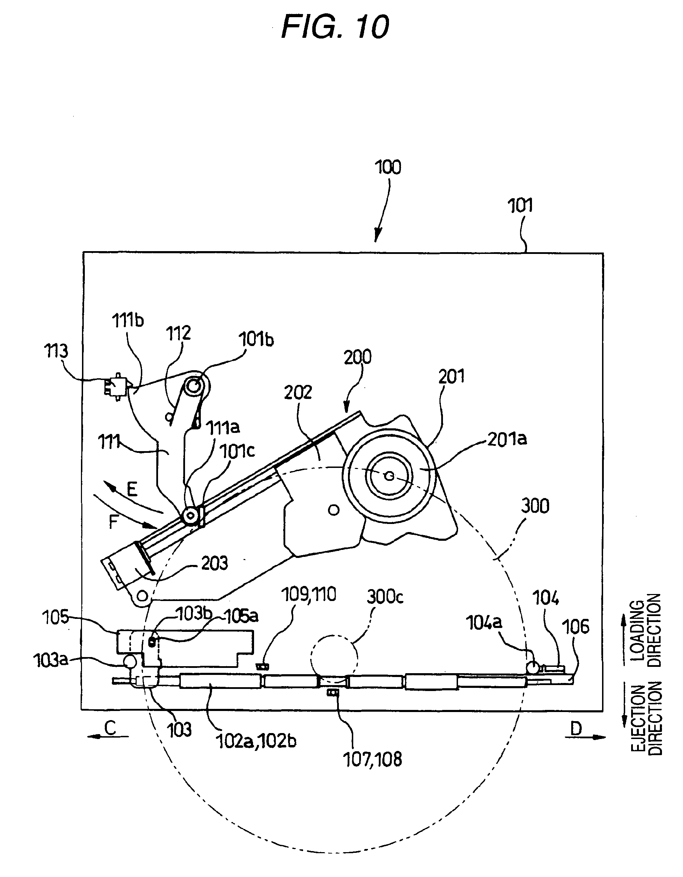

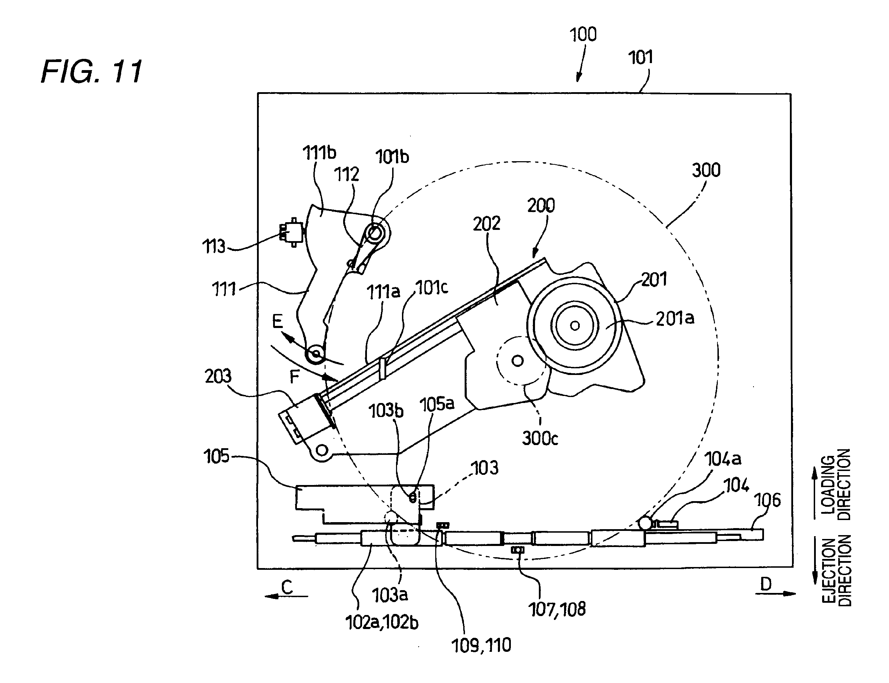

When the disc 300 further advances, the disc 300 is brought into contact with the roller member 111a of the lever member 111 as shown in Fig. 10, and the lever member 111 begins to be pivotally moved in a direction E (in Fig. 10) against the bias of the resilient member 112. Then, the lever member 111 is pivotally moved as shown in Fig. 11, and the projection 111 b of the lever member 111 is brought into contact with the push switch 113, so that the output of the push switch 113 changes from High to Low (T5 in Fig. 13).
When the disc 300 further advances, the contact of the disc 300 with the shaft member 103a of the lever member 103 and the shaft member 104a of the lever member 104 is canceled, and the lever members 103 and 104 are held in the respective initial positions. And, the output levels of the position sensors 105 and 106 return to the respective initial positions (T6 in Fig. 13).

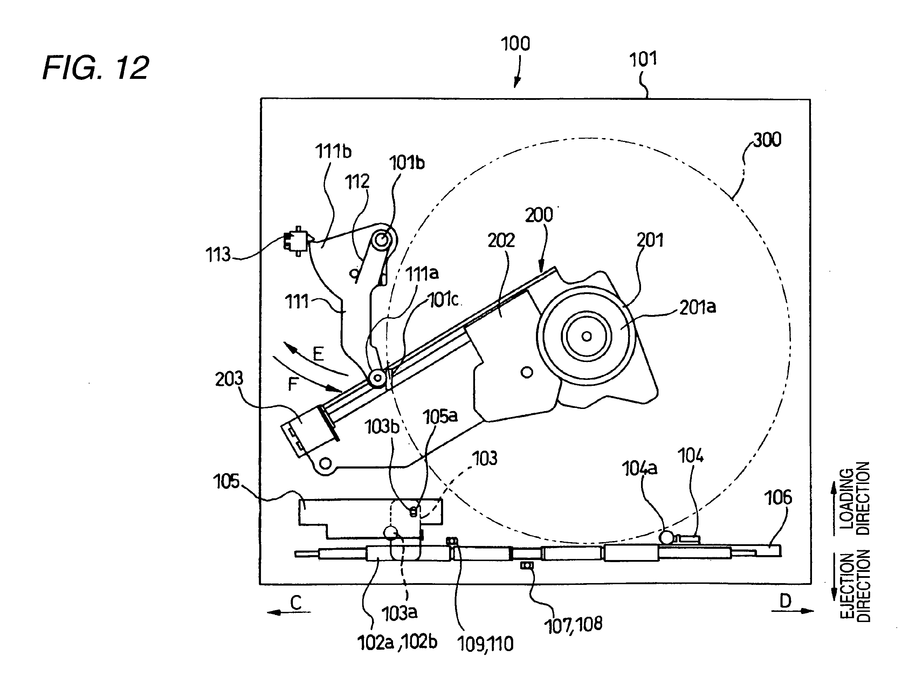

When the disc 300 further advances as shown in Fig. 12, the press-holding of the disc 300 by the roller members 102a, 102b is canceled, and the disc 300 is moved in a direction toward a recording/reproduction position by the action of the lever member 111 and resilient member 112. As a result, the disc 300 is sequentially brought out of the detection positions of the light reception element 108 and light reception element 110, and therefore the light reception element 108 changes to Low (T7 in Fig. 13), and also the light reception element 110 changes to High (T8 in Fig. 13).

And, the engagement of the lever member 111 with the push switch 113 is canceled, and the output of the push switch 113 changes from Low to High (T9 in Fig. 13). At the timing when the output of the push switch 113 changes to High, the operation of the drive source (not shown) is stopped, so that the rotation of the roller member 102a is stopped. Then, the disc 300 is conveyed by a mechanism (not shown) to the position of recording and reproduction by the disc recording/reproduction portion 200, and the disc 300 is held on the turntable 201 a.
With this operation, the loading operation of the disc 300 is completed, and the disc device 100 is rendered into a condition capable of recording and reproduction of the disc 300.

### (2) Operation for Ejecting Disc 300

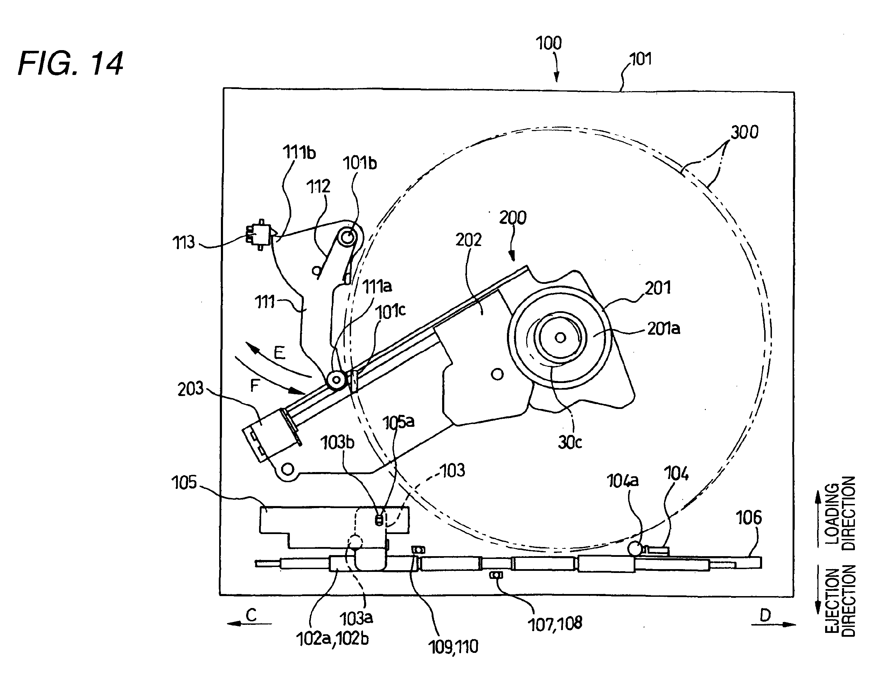

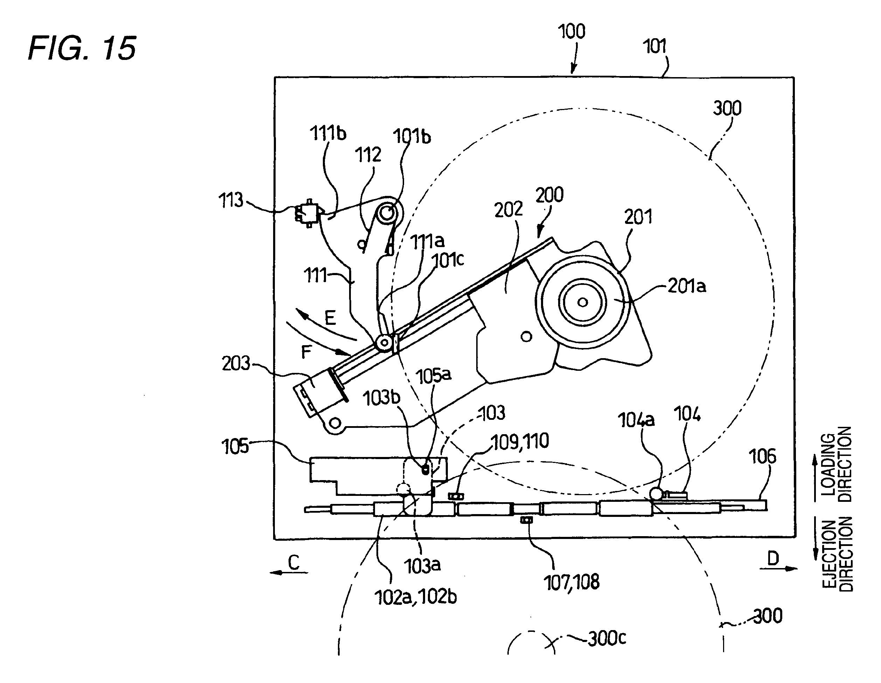

Next, the ejecting operation of the disc device 100 for a disc 300 will be described using Fig. 14 and Fig. 15. Incidentally, in the disc device 100 of this embodiment, the 8-cm adapter 302 holding an 8-cm disc 301 at its central portion is handled similarly with a disc 300, and therefore explanation of the operation of the disc device 100 for the 8-cm adapter 302 holding the 8-cm disc 301 at its central portion will be omitted.

First, the holding of the disc 300 on the spindle motor 201 is canceled by a mechanism (showing is omitted), and the disc ejecting operation is started as shown in Fig. 14.
Next, the disc 300 is conveyed in an ejection direction by a mechanism (showing is omitted), and the disc 300 is brought into contact with the roller member 111a of the lever member 111, and the lever member 111 begins to be pivotally moved in the direction E (in Fig. 14) against the bias of the resilient member 112. Then, the lever member 111 is pivotally moved, and the projection 111 b of the lever member 111 is brought into contact with the push switch 113, so that the output of the push switch 113 changes from High to Low. At the timing when the output of the push switch 113 changes to High, the drive source (not shown) is driven, thereby starting the rotation of the roller member 102a.

When the disc 300 is further conveyed toward the roller members 102a, 102b by the mechanism (showing is omitted), the disc 300 is brought into contact with the rollers 102a, 102b, and is press-held between the roller members 102a, 102b, so that the disc carrying-out of the disc 300 by the roller member 102a is started.
As shown in Fig. 15, the disc 300 advances in the ejection direction at a timing reverse to that during the loading, and the disc 300 is conveyed to an ejection-completed position.
Incidentally, the completion of the ejection of the disc 300 is detected by the light reception elements 108 and 110 or the position sensors 105 and 106 or a detection device (not shown).
With this operation, the ejection operation for the disc 300 is completed.

### (3) Operation for a Plurality of Discs 300

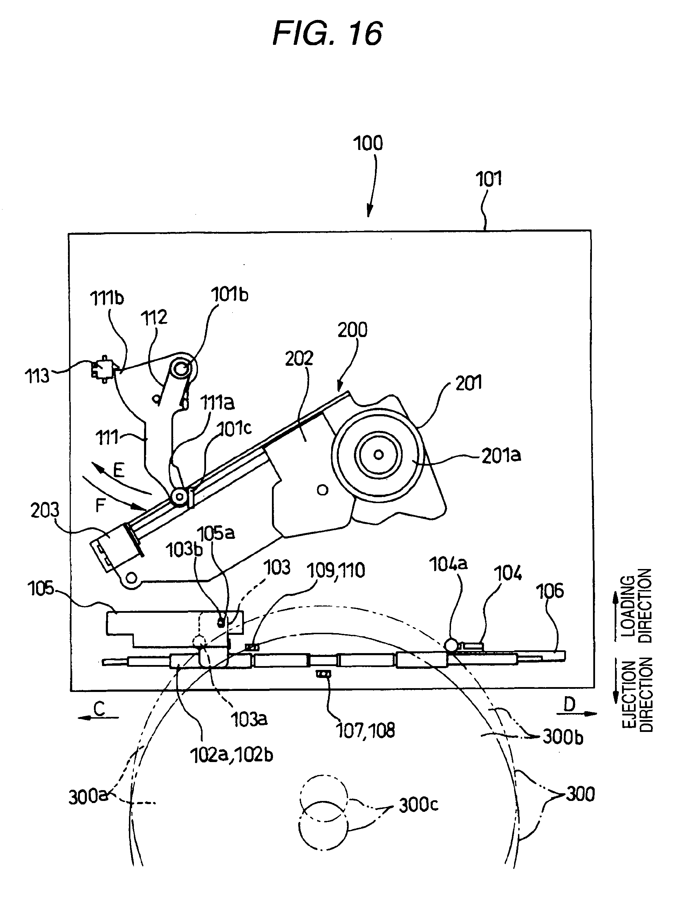

Next, the operation of the disc device 100 effected when a plurality of (for example, two) discs 300 are inserted will be described using Fig. 16 to Fig. 20.
When a plurality of (for example, two) discs 300 are inserted into the interior of the disc insertion port 101 a of the chassis 101, light emitted from the light-emitting element 107 is shielded by the preceding disc 300, and the output of the light reception element 108 changes to High (T1 in Fig. 18), and as a result the fact that the disc 300 has been inserted into the interior of the disc device 100 is detected, and the disc device 100 causes the operation of the power source to be started, thereby starting the rotation of the roller member 102a. As a result, the loading of the disc 300 is started.

When the automatic loading of the plurality of (for example, two) discs 300 is continued, the preceding disc 300 reaches the disc thickness detection position formed by the light-emitting element 109 and the light reception element 110, and light emitted from the light-emitting element 109 is reflected by the preceding disc 300, and reaches the light reception element 110, so that the output of the light reception element 110 changes from High to Low (T2 in Fig. 18).

For example, when the recording surface 300a-side disc 300 of the discs 300 is precedingly inserted into the apparatus, a reflection surface for reflecting light emitted from the light-emitting element 109 is disposed at a level one disc lower than that in the normal case, and therefore the output level of the light reception element 110 is different from that obtained when one disc 300 is inserted into the apparatus. Therefore, the fact that the plurality of (for example, two) discs 300 have been inserted into the apparatus can be detected, and the automatic loading of the discs 300 is stopped, and also the direction of rotation of the roller member 102a is reversed by reversing the direction of operation of the drive source (not shown), thereby conveying the plurality of (for example, two) discs 300 to the ejection-completed position.

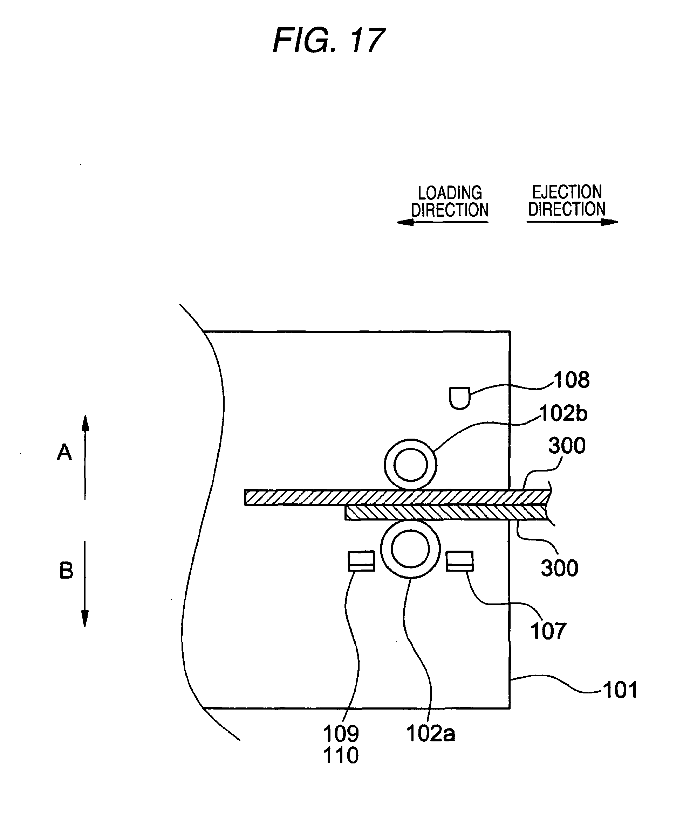

On the other hand, when the label surface (300b)-side (direction A in Fig. 17) disc 300 of the discs 300 is precedingly inserted into the apparatus as shown in Fig. 17, light emitted from the light-emitting element 109 and reflected by a recording surface 300a of the preceding disc 300 is normally received by the light reception element 110, and therefore the loading of the plurality of discs is not detected, and the discs 300 are further conveyed. Then, when the recording surface 300a-side (direction B in the drawing) disc 300 of the discs 300 reaches the disc thickness detection position formed by the light-emitting element 109 and the light reception element 110, light emitted from the light-emitting element 109 is reflected by a recording surface 300a of the recording surface 300a-side (direction B in the drawings) disc 300, and the reflected light is received by the light reception element 110 (T3 in Fig. 18). At this time, the output level of the light reception element 110 is different from that obtained when one disc 300 is inserted into the apparatus, and therefore the fact that the plurality of (for example, two) discs 300 have been inserted into the apparatus is detected, and the automatic loading of the discs 300 is stopped, and also the direction of rotation of the roller member 102a is reversed by reversing the direction of operation of the drive source (not shown), thereby conveying the plurality of (for example, two) discs 300 to the ejection-completed position.

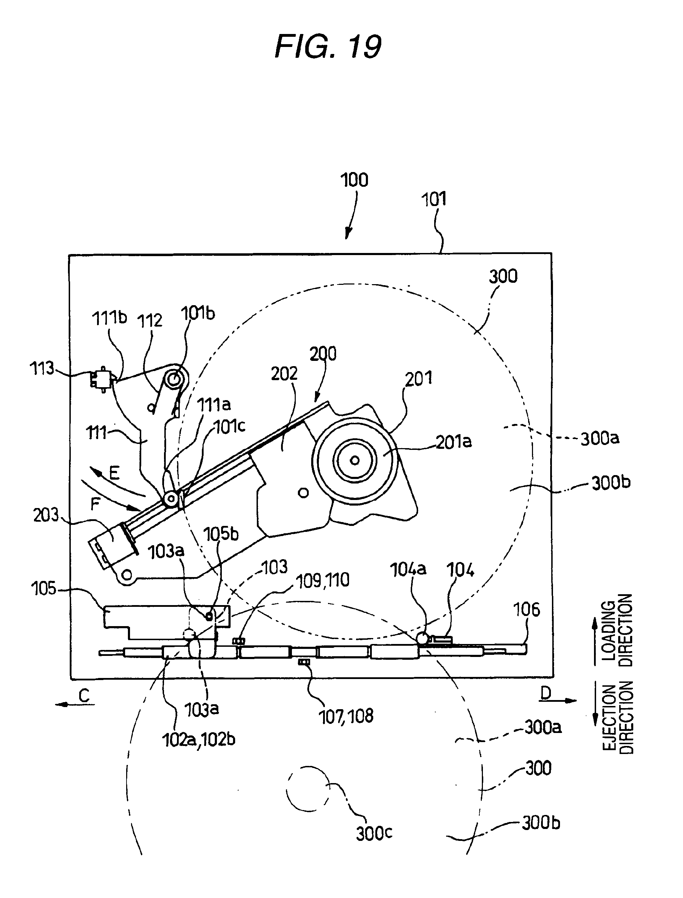

Furthermore, when a plurality of (for example, 2) discs 300 are inserted into the apparatus in such a manner that the discs are offset from each other in a large amount and do not overlap each other in the direction of their thickness as shown in Fig. 19, the output level of the light reception element 110 does not change with the disc thickness detection unit formed by the light-emitting element 109 and the light reception element 110, as shown in Fig. 20, and therefore the fact that the plurality of (for example, two) discs 300 have been inserted into the apparatus can not be detected. Then, when the plurality of (for example, two) discs 300 are further advanced, the engagement of the preceding disc 300 with the shaft member 103a of the lever member 103 and the shaft member 104a of the lever member 104 is canceled, and the output levels of the position sensors 105 and 106 are returned to their respective initial positions (T1 in Fig. 18).

When the plurality of (for example, two) discs 300 are further advanced, the subsequent disc 300 is brought into engagement with the shaft member 103a of the lever member 103 and the shaft member 104a of the lever member 104, and the lever member 103 begins to slide in the direction C in the drawings while the lever member 104 begins to slide in the direction D in the drawings.
As a result, the output levels of the position sensors 105 and 106 increase (T2 in Fig. 18). At this timing, the fact that the plurality of (for example, two) discs 300 have been inserted into the apparatus is detected, and the automatic loading of the discs 300 is stopped, and also the direction of rotation of the roller member 102a is reversed by reversing the direction of operation of the drive source (not shown), thereby conveying the plurality of (for example, two) discs 300 to the ejection-completed position.

As described above, there is provided the disc thickness detection unit for electrically detecting the thickness of the discs inserted into the apparatus, and therefore it can be identified whether the number of the discs inserted in the apparatus is one or plural. By controlling the conveying roller 101, etc., on the basis of this identification result, the stable disc insertion and ejection can be achieved, and also damage to the mechanisms within the apparatus and the discs 300 can be reduced.

Incidentally, in the above-mentioned first embodiment, there is provided the construction in which the loading and ejection of the disc 300 are effected by rotating the roller member 102a by the power source (not shown). In the present invention, however, there may be provided a construction in which the loading and ejection of the disc 300 are effected by rotating the roller member 102b by the power source (not shown).
Furthermore, in this embodiment, there is provided the construction in which the restriction of the label surface 300b (the direction A in the drawings) is effected by the roller member 102b. In the present invention, however, there may be provided a construction in which the restriction is effected by a fixed-type disc guide member.
Furthermore, in this embodiment, there is provided the construction in which the disc 300 is inserted into the apparatus, with its recording surface 300a facing in the downward direction (the direction B in the drawings) of the apparatus. In the present invention, however, there may be provided a construction in which the constructions of the light-emitting element 107, light reception element 110 and disc recording/reproduction portion 200 are arranged reversely in the upward-downward direction relative to the disc 300 so that the disc 300 can be inserted into the apparatus with the recording surface 300a facing in the upward direction (the direction A in the drawings) of the apparatus.

Furthermore, in this embodiment, although there is provided the construction in which the movements of the lever members 103, 104 in the left and right directions (the direction C and the direction D in the drawings) of the apparatus are detected by the position sensors 105, 106, there may be provided a construction in which the detection is effected by push switches or light-emitting elements and light reception elements for detecting the slide-starting positions of the lever members 103, 104 and the maximum displacements in the left and right directions of the apparatus.
Furthermore, in this embodiment, although there is provided the construction in which the thickness of the discs 300 inserted in the apparatus is detected by the output level of the light reception element 110 obtained when the light reception element 110 receives light emitted from the light-emitting element 109, there may be provided a construction in which utilizing the fact that the distance from the light-emitting element 109 and the light reception element 110 to the disc 300 changes depending on the thickness of the discs 300, the thickness of the discs 300 is detected by a difference in the timing from the time at which the light-emitting element 109 begins to emit light to the time at which the light reception element 110 receives the light.

### (Second Embodiment)

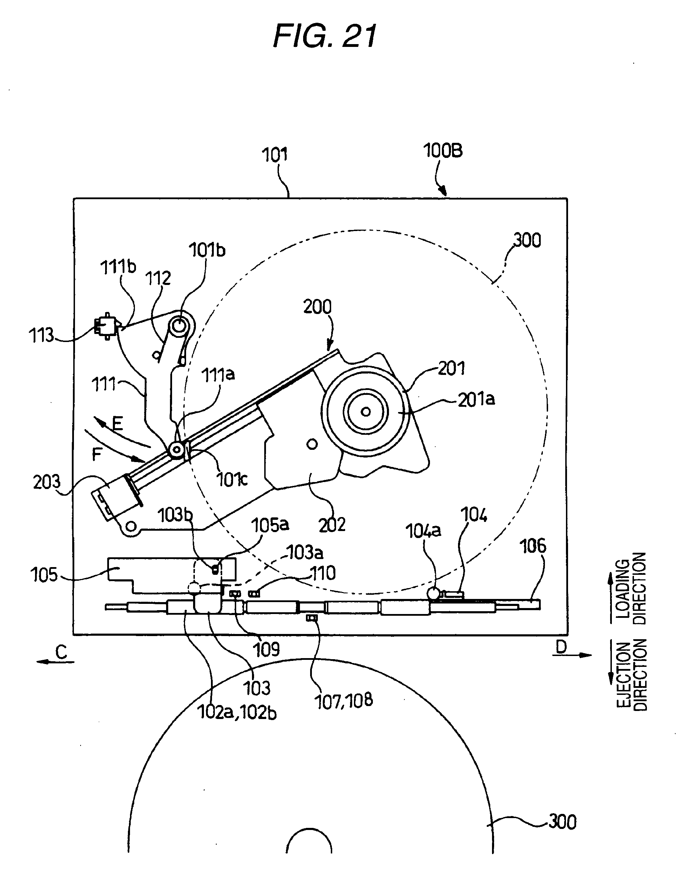

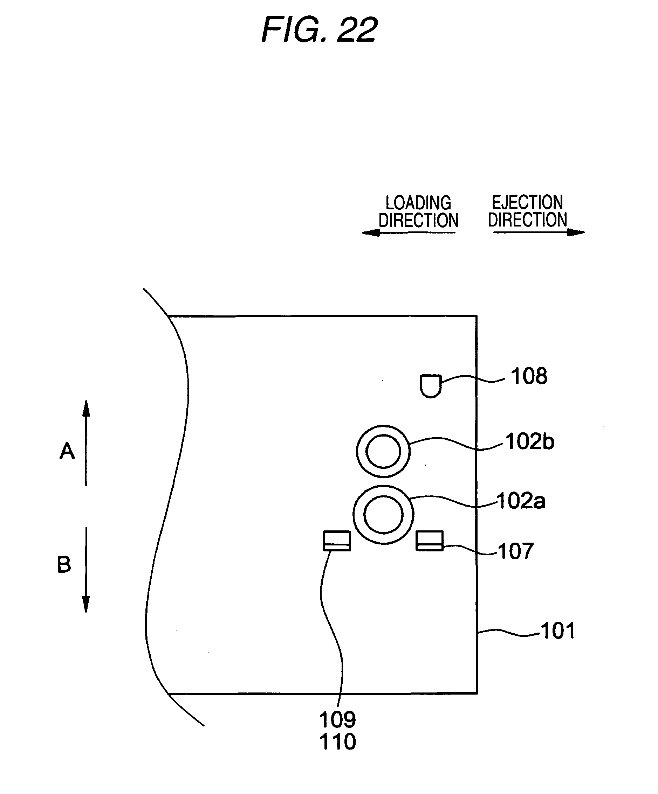

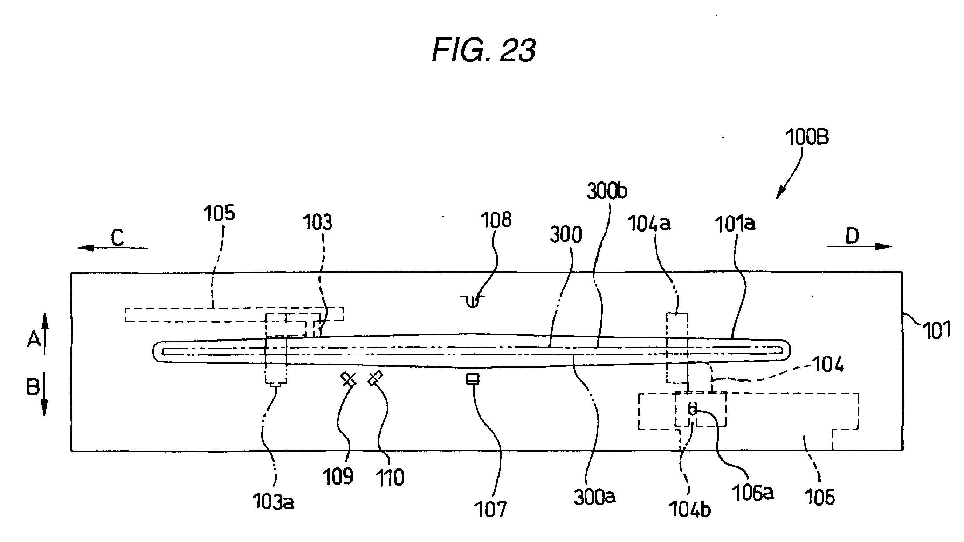

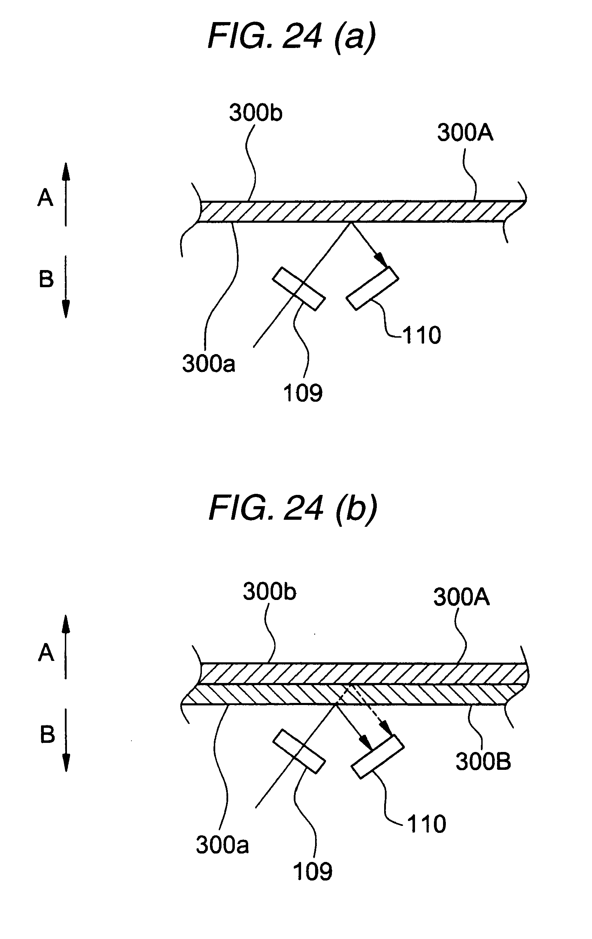

Next, a second embodiment of a disc device 100B of the present invention will be described. Fig. 21 is a top plan view of an important portion of the disc device according to the second embodiment of the present invention, Fig. 22 is a side-elevational view of an important portion of the disc device according to the second embodiment of the present invention, and Fig. 23 is a front-elevational view of an important portion of the disc device according to the second embodiment of the present invention. Fig. 24(a) is a front-elevational view of an important portion of the disc device according to the second embodiment of the present invention during the time when one disc passes a disc insertion and ejection portion, and Fig. 24(b) is a front-elevational view of the important portion of the disc device according to the second embodiment of the present invention during the time when two discs pass the disc insertion and ejection portion. Incidentally, those portions common to the above-mentioned first embodiment will be designated by identical reference numerals, respectively, and repeated explanation will be omitted.

In the disc device 100B of this embodiment, a light-emitting element 109 and a light reception element 110 which serve as a disc thickness detection unit are provided respectively at positions offset from each other in a left-right direction, and light from the light-emitting element 109 is irradiated obliquely relative to a disc 300. And, the positions and installation angles of the light-emitting element 109 and light reception element 110 are so set that when a plurality of (for example, two) discs 300 are inserted into the apparatus, and the recording surface 300a-side (direction B in the drawings) disc 300 of the discs 300 reaches a disc thickness detection position, the amount of light (which reaches the light reception element 110 after emitted from the light-emitting element 109 and reflected by the recording surface of the disc 300) becomes maximum.
Namely, as shown in Fig. 24(a), the arrangement is such that the amount of receiving of the reflected light from the recording surface 300a-side disc 300B is larger than the amount of receiving of the reflected light from the label surface (300b)-side disc 300A. Therefore, when the thickness of the discs 300 changes, a path of light from the light-emitting element 109 to the light reception element 110 becomes different, so that the amount of change of the output level of the light reception element 110 becomes large.

Incidentally, the other construction and operation of the apparatus are similar to those of the first embodiment, and therefore explanation of the operation of the disc device 100B is omitted.

Although the present invention has been described in detail with reference to the specific embodiments, it will be obvious to those skilled in the art that various changes and modifications can be added without departing from the spirits and scope of the present invention.
The present Application is based on Japanese Patent Application, Application No.2005-009051 filed on January 17, 2005, and contents thereof are incorporated herein as a reference.

### INDUSTRIAL APPLICABILITY

As described above, the disc identification device, the disc insertion-ejection device and the disc device of the present invention are useful as a disc identification device, a disc insertion-ejection device, a disc device, etc., in which it is electrically identified whether the number of discs inserted into the apparatus is one or plural, and the mechanisms are controlled on the basis of this identification result, thereby achieving advantages that the stable disc insertion and ejection can be achieved and that damage to the mechanisms and the discs can be reduced, and the insertion of two discs into the disc device can be prevented.

## Claims

1. A disc identification device, comprising:
a disc thickness detection unit that detects a thickness of discs inserted into the device,
wherein it is identified whether the number of the discs inserted into an apparatus is one or plural.

2. The disc identification device according to claim 1, comprising:
a disc restricting member that contacts a label surface of the disc inserted into the apparatus to hold the label surface in a predetermined position, the label surface being on a side opposite to a recording surface of the disc; and
a disc conveying roller that is urged toward the disc restricting member to be press-contacted with the recording surface of the disc, and conveys the disc by its rotation,
wherein the disc restricting member is provided at a side opposite to the recording surface of the disc relative to the disc conveying roller so as to restrict movement of the disc in a direction opposed to the recording surface of the disc.

3. The disc identification device according to claim 2, wherein a thickness detection by the disc thickness detection unit is performed at a portion of the apparatus disposed inwardly relative to the disc conveying roller.

4. The disc identification device according to any one of claims 1 to 3, wherein the disc thickness detection unit is configured by a light-emitting element and a light reception element which are disposed at a side facing the recording surface of the disc in the process of being conveyed, and detects an amount of light reflected from the recording surface of the disc to detects the thickness of the discs.

5. The disc identification device according to any one of claims 1 to 4, wherein the disc thickness detection unit is configured by a light-emitting element and a light reception element which are disposed at a side facing the recording surface of the disc in the process of being conveyed, and detects a timing from emission to reception of light reflected from the recording surface of the disc to detect the thickness of the discs.

6. The disc identification device according to any one of claims 1 to 5, wherein the light-emitting element and the light reception element are disposed obliquely relative to the recording surface of the disc in the process of being conveyed.

7. The disc identification device according to any one of claims 1 to 5, wherein a thickness detection by the disc thickness detection unit is performed at a position where a recording surface of an 8-cm disc held on an adapter passes.

8. The disc identification device according to any one of claims 1 to 7, wherein a first lever member which is moved by contact with the disc is provided at a front side in a disc inserting direction; and
wherein whether the number of the discs inserted into the apparatus is one or plural is identified by a timing of operation of the first lever member.

9. A disc insertion-ejection device for controlling operations regarding inserting and ejecting the disc on the basis of the identification result of the disc identification device according to any one of claims 1 to 8.

10. The disc insertion-ejection device according to claim 9, wherein even when a plurality of discs are inserted into the apparatus, a disc conveying path capable of inserting and ejecting the discs is secured.

11. A disc device comprising the disc identification device and the disc insertion-ejection device according to any one of claims 1 to 10.

12. An electronic apparatus comprising the disc device according to claim 11.
